# EUROPEAN PATENT APPLICATION

(11) **EP 1 383 130 A2**
(43) Date of publication of application: **21.01.2004**
(21) Application number: 03015518.8
(22) Date of filing: 09.07.2003
(51) Int. Cl.: G11B 33/02, G11B 15/675

(54) **Swing door for cassette inlet of magnetic recording-and-reproducing device**

(30) Priority: 19.07.2002 JP 2002210795
(71) Applicant: ORION ELECTRIC CO., Ltd., Takefu-City, Fukui 915-8555 (JP)
(72) Inventor: Yanagihara, Naoto, c/o Orion Electric Co., Ltd., Takefu-shi, Fukui 915-8555 (JP)
(74) Representative: VOSSIUS & PARTNER

(57) **Abstract**

A swing door fixed to a cassette inlet of a magnetic recording-and-reproducing device. In order to prevent the resilient member coming off from the swing door even when a pivot pin is broken, it comprises a rectangular plate having pivot pins projecting from the opposite ends of the upper longitudinal edge of the plate. The opposite pivot pins are supported by the counter bearings of the front panel of the device. The upper longitudinal edge of the plate has a recess notched inward apart from one of the opposite pivot pins, and the rectangular plate has a resilient member fixed to the recess.

## Description

The present invention relates to a swing door fixed to the cassette inlet of a magnetic recording-and-reproducing device.

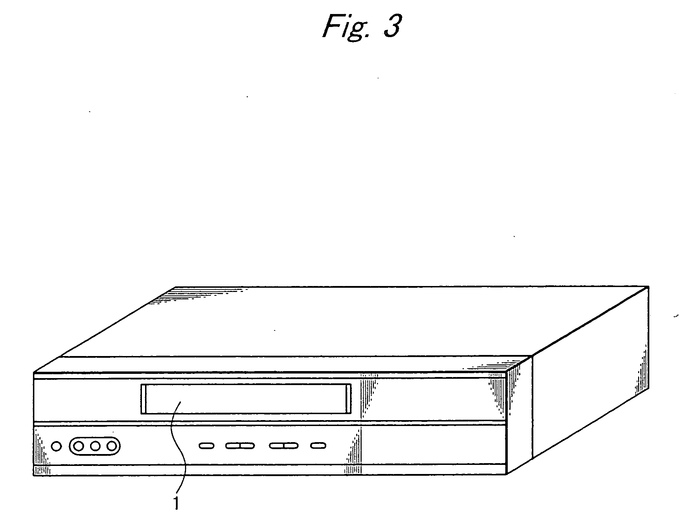

Referring to Fig.3, a magnetic recording-and-reproducing device has a swing door 1 rotatably fixed to its cassette inlet. When a tape cassette is applied to the swing door 1 to push the door 1, the door 1 yieldingly swings inward to allow the tape cassette to enter the device. Normally the door 1 is spring-biased toward its closing position, thereby preventing foreign matters from invading.

The door 1 comprises a rectangular plate having pivot pins projecting from the opposite ends of the upper longitudinal edge of the plate, and the opposite pivot pins are supported by the associate bearings of the front panel of the device.

JP 6-77090(U), titled "Cassette Door Fastening Structure" discloses a fastening structure for pivotally fastening the swing door to the cassette inlet frame of a magnetic recording-and-reproducing device, which fastening structure facilitates the fastening of the swing door to the cassette inlet frame, and eliminates the possibility of its pivot pins coming off from the cassette inlet frame. Specifically, one pivot pin has a key-like projection formed thereon whereas the counter vertical side of the doorframe has a key-like hole to allow the pivot pin to enter. A coiled spring is attached to the pivot pin to be caught by its key-like projection, thereby preventing the spring from coming off from the pivot pin. When the pivot pin with the coiled spring is inserted in the key-like hole of the vertical side of the doorframe, the pivot pin cannot come off from the key-like hole of the vertical side because the pivot pin is caught by the projection.

In this conventional structure the spring cannot come off from the projection of the pivot pin, but when a strong force is applied to the door to break the pivot pin, the spring comes apart from the broken pivot pin. When the spring jumps into the inside of the device, a serious accident such as short-circuiting may happen since such spring is generally made of metal. Also, disadvantageously when the door is being fixed to the cassette inlet, it may happen that the spring comes off from the pivot pin to jump into the inside of the device where it cannot be easily located.

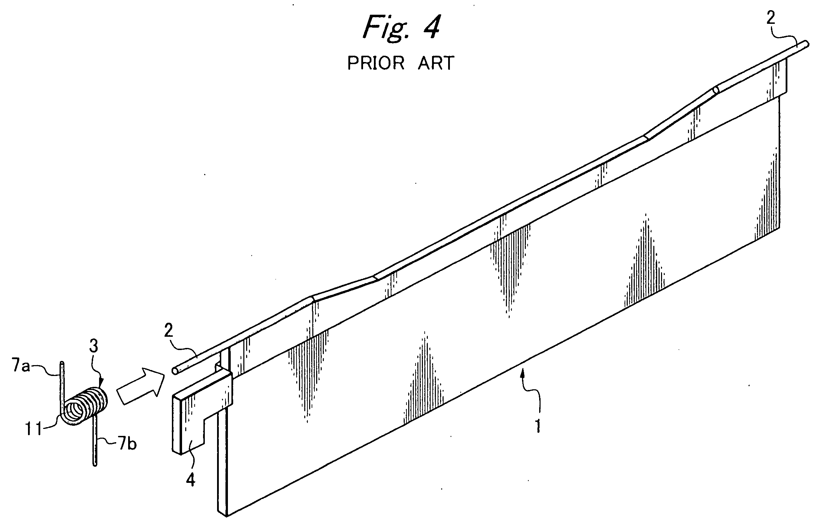

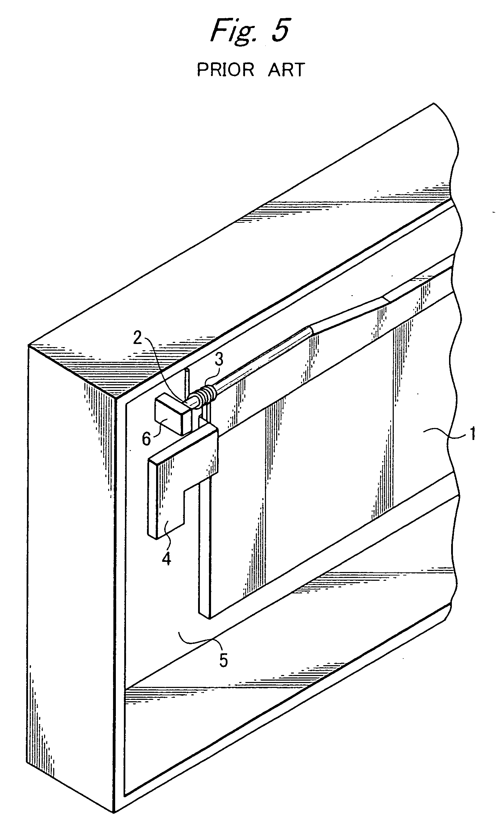

Referring to Fig.4, a conventional swing door 1 has pivot pins 2, 2 projecting from the opposite ends of the upper longitudinal edge of the door, and one of the opposite pivot pins has a coiled spring 3 wound therearound. Fig.5 shows how the swing door 1 is attached to the cassette inlet of the front panel 5 of the cabinet. As seen from the drawing, the coiled spring 3 is wound around the pivot pin 2, and the pivot pin 2 is pivotally supported by a bearing 6, which is fixed to the front panel 5. One end extension 7a of the coiled spring 3 is laid on the front panel whereas the other end extension 7b is laid on the door 1. The end extension 7b of the coiled spring 3 pushes the door 1 on the rear side to close the cassette inlet normally.

The pivot pins 2 is fragile, and when the pivot pin 2 is broken, the coiled spring 3 comes off from the broken pivot pin 2 and jumps into the inside of the device.

One object of the present invention is to provide a swing door rotatably fixed to the cassette inlet of a magnetic recording-and-reproducing device, guaranteed to be free of such defects as described above. Specifically a swing door according to the present invention is so constructed as to prevent the resilient member from coming off from the pivot pin even when it is broken. Also, it is to provide the swing door can be fixed to the cassette inlet without allowing the resilient member to come off from the pivot pin.

To attain this object a swing door rotatably fixed to a cassette inlet of a magnetic recording-and-reproducing device is improved according to the present invention in that it comprises a rectangular plate having pivot pins projecting from the opposite ends of the upper longitudinal edge of the plate, the opposite pivot pins being supported by counter bearings of a front panel of the device, the upper longitudinal edge of the plate having a recess notched inward apart from one of the opposite pivot pins, the rectangular plate having a resilient member fixed to the recess.

The rectangular plate has engagement pins in the recess to be in alignment with the pivot pin, and a coiled spring is fixed to the recess with its opposite end-extensions laid on the plate and the front panel.

Other objects and advantages of the present invention will be understood from the following description of a swing door according to one preferred embodiment of the present invention, which is shown in accompanying drawings.
Fig.1 is a perspective view of a swing door according to the present invention;
Fig.2 is a perspective view illustrating how the swing door is fastened to the front panel of the cabinet;
Fig.3 illustrates a magnetic recording-and-reproducing device in appearance;
Fig.4 is a perspective view of a conventional swing door; and
Fig.5 is a perspective view illustrating how the conventional swing door is fastened to the front panel of the cabinet.

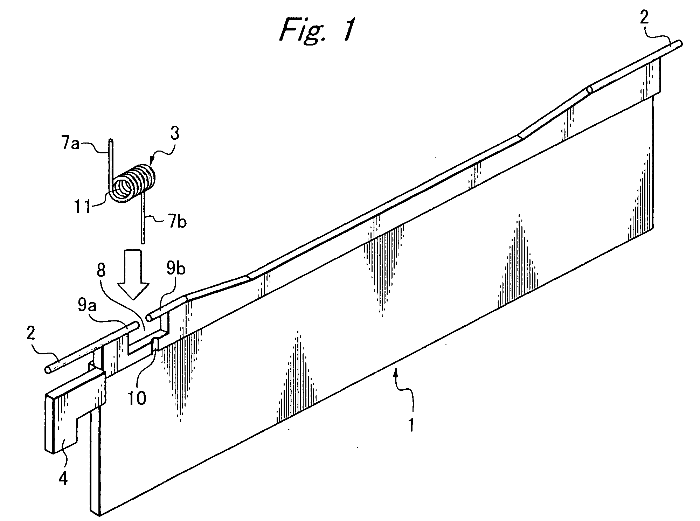

Referring to Fig.1, a swing door 1 according to the present invention is basically similar to the conventional one, having two opposite pivot pins 2, 2 projecting from its upper edge ends, and a stopper 4 formed on one side. The opposite pivot pins 2, 2 are supported by counter bearings fixed to the front panel, and the stopper 4 is applied to the front panel.

As seen from the drawing, the upper longitudinal edge of the plate 1 has a recess 8 notched inward apart from one of the opposite pivot pins. The rectangular plate 1 has engagement pins 9a and 9b in the recess 8 to be in alignment with the pivot pin 2. As seen from the drawing, the two engagement pins 9a and 9b confront to each other, leaving a gap large enough to insert a coiled spring 3. The engagement pins 9a and 9b are inserted in the turns 11 of the coiled spring 3, so that the coiled spring 3 is fixedly held by the engagement pins 9a and 9b. The plate 1 has a groove 10 made on its rear side to extend down from the bottom edge of the recess 8, thereby catching the end extension 7b of the coiled spring 3.

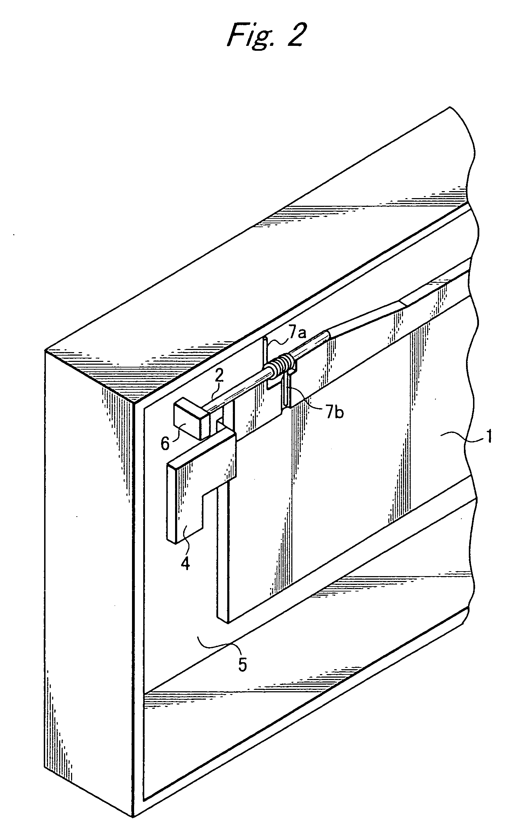

Referring to Fig.2, the swing door 1 is rotatably fixed to the rear side of the front panel 5 with the opposite pivot pins 2, 2 fitted in the associated bearings 6. The coiled spring 3 is wound around the confronting engagement pins 9a and 9b in the recess 8 with one end extension 7a lying on the front panel 5 and with the other end extension 7b lying on the door surface. Thus, the swing door 1 is normally closed under the influence of the coiled spring 3. When a tape cassette is being inserted in or taken out of the device, the coiled spring 3 is yieldingly twisted to open the swing door 1, and immediately after the tape cassette is completely inserted in or taken out of the device, the swing door 1 is closed.

Assume that an undesired strong force is applied to the pivot pin 2, and that the pivot pin 2 is broken, thus making the swing door 1 come off from the cassette inlet. The coiled spring 3, however, cannot fall from the swing door 1; the engagement pins 9a and 9b remain as they are, holding the coiled spring 3 totally independent from the breaking of the pivot pin 2.

In the particular embodiment a coiled spring 3 is used as the resilient member. Alternatively a rubber or resin plate of good resiliency can be equally used. The resilient plate has holes made on its opposite sides, and it can be fixed to the recess by inserting the confronting engagement pins 9a and 9b into the holes of the resilient plate. The engagement pins 9a and 9b should not be understood as restrictive; any other appropriate bearing means would be obvious to those skilled in the art.

As may be understood from the above, a swing door has a resilient member fixedly held in its recess, and therefore, even when the pivot pin of the swing door is broken to allow the swing door to come off from the cassette inlet of the cabinet, the resilient member cannot come off from the recess to jump into the inside of the device. The device, therefore, can be guaranteed to be free of any serious circuit trouble, which otherwise may be caused by the coiled spring jumping into the inside of the device.

In attaching the swing door to the cassette inlet of the cabinet, the coiled spring is attached to the recess of the swing door, and then the swing door is fixed to the cassette inlet. Thus, the swing door can be fixed to the cassette inlet with ease.

## Claims

1. A swing door rotatably fixed to a cassette inlet of a magnetic recording-and-reproducing device comprising: a rectangular plate having pivot pins projecting from the opposite ends of the upper longitudinal edge of the plate, the opposite pivot pins being supported by counter bearings of a front panel of the device, the upper longitudinal edge of the plate having a recess notched inward apart from one of the opposite pivot pins, the rectangular plate having a resilient member fixed to the recess.

2. A swing door rotatably fixed to a cassette inlet of a magnetic recording-and-reproducing device comprising: a rectangular plate having pivot pins projecting from the opposite ends of the upper longitudinal edge of the plate, the opposite pivot pins being supported by counter bearings of a front panel of the device, the upper longitudinal edge of the plate having a recess notched inward apart from one of the opposite pivot pins, the rectangular plate having engagement pins in the recess to be in alignment with the pivot pin, and a coiled spring fixed to the recess with their opposite end-extensions laid on the plate and the front panel.
